(19) Europäisches Patentamt
European Patent Office
Office européen des brevets

(11) **EP 1 818 691 A2**

(12) **EUROPEAN PATENT APPLICATION**

(43) Date of publication:
**15.08.2007 Bulletin 2007/33**

(51) Int Cl.:
***G02B 1/04*** *(2006.01)* ***C03C 17/00*** *(2006.01)*

(21) Application number: **07100778.5**

(22) Date of filing: **18.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.01.2006 BR PI0600312**

(71) Applicant: **Opto Eletrônica S/A**
**SP 13563- 330 São Carlos (BR)**

(72) Inventors:
• **de Castro Neto, Jarbas Caiado**
  **13560-570, SÃO CARLOS, SÃO PAULO (BR)**
• **Antonio, Nelson Maurici**
  **13564-030, SÃO CARLOS, SÃO PAULO (BR)**

(74) Representative: **Ghioni, Carlo Raoul Maria et al**
**Bugnion S.p.A.,**
**Viale Lancetti 17**
**20158 Milano (IT)**

(54) **Process of making a nanostructured thin film, self-cleaning nanostructured thin film and method to apply said film on lens surfaces and optical devices**

(57)  The present invention refers to a homogeneous nanostructured thin film manufacture method provided with self cleaning properties against organic substances to be applied directly on transparent materials surfaces used on optical components, especially in glasses or, on thin films with anti-reflex function previously deposited on this materials.

More specifically, said method comprises a combination of hydrolytic and non-hydrolytic reactions. The self-cleaning action is activated by means of oxidation catalytic activity promoted in presence of titan dioxide ($TiO_2$) and exposition to electromagnetic radiation.

EP 1 818 691 A2

**Description**

**FIELD OF INVENTION**

The present invention relates to a method for obtaining nanostructured thin film having a self-cleaning function. More specifically, said thin film act as a covering layer for transparent optical substrates surfaces. Further, the present invention relates to a direct application method of said thin film to the substrate.

**RELATED TECHNIQUES**

Lens used in glasses and optical devices in general, presents as most common inconvenience the occurrence of stains on its surfaces, because they are susceptible to continuous accumulation of a generic material called dust, which is basically compounded by dust particles, aerosol and organic substances residues.

The organic substances are produced in several sources, some of them mainly originated from the glasses or optical devices of user's body.

In this case, the organic substances production sources are detritus and expelled substances during transpiration, tearing and perspiration.

Fat and oils, presenting on the skin and hair of the glass and optical devices users, are among such produced substances, as well as others body residues.

However, the organic substances can be also derived from external sources, which cooperate to stain the glasses, as well as, others optical devices. Among such organic substances derived of external sources, there are substances derived of foods and general utensil used by the user, besides the urban pollution, such as: fuel motor discharges, etc.

The agglomerate formed by the combination of dust and organic substances, in particular fat, usually adheres strongly to the glass surfaces and optical devices.

The fat existing on the tip of user's toe, also adheres to optical device and lens surfaces, leaving in such surfaces fatty digital prints, which can produce permanent stains, due to deep impregnation caused on the substrate.

The dust accumulation on the substrate, that is, on glasses and others optical devices surfaces, require periodically cleanness procedures on said substrates.

Periodically cleanness procedures are especially important for glasses, viewfinders and observing or sacrifice windows, because these elements are more exposed to the ambient than the internal lenses of the optical systems.

However, dust and poluents that contaminate the atmosphere in the urban and industrial ambient also penetrate in the optical devices elements which are not sealed closed, and so, the performance of such optical devices is prejudiced.

Although the cleanness procedures adopted in such substracts are efficient in dust elimination, establishing again the lens transparence, the frequency of such procedures is undesired, having as inconvenient, the costs, the loss of time and the work, not only of the user, but also, because the optical devices are not usable during the cleanness procedure.

Furthermore, the cleanness procedure also represents a risk factor to the lens and others optical devices, because during the mechanical or chemical cleanness the chance in occur an accident and damage the lens and others optical elements devices are higher.

Aiming to obtain lenses and optical devices elements which becoming clean during a greater period of time, being more comfortable to vision, having higher transparence, no stains, and be able in overcome the cleanness procedures, some studies have been performed by specialists in the technique.

Such studies are to obtain new materials and new covering methods for such substracts, in order to facilitate the cleanness procedure even dispensing such procedure. In this path, two new studies paths were established:

A first path, aimed to obtain higher hydrophilic materials. The hydrophilic materials avoiding the adhesion of dust particles, especially mineral dust, because the presence of water on the surface of substract forms a thin humid film, avoiding the adhesion of said dust particles.

Besides, the thin film formation due to the presence of water molecules, the higher affinity of substract surface by water molecules, propitiate a constant water flux, said flux carrying on the dust particles out of the lens surface.

In this case, an additional cleansing procedure is necessary. However it is not necessary scour or rubs the lens, not even use any type of additive substance, as detergent or similar, due to the reduced adherence that the water film promotes between the dust and the substrate surface.

A second path study is aimed to obtain a covering which have self-cleaning properties, that is, which continuously eliminate the organic matter possible to adhere to the lens, by means organic substances oxidation until its complete mineralization, in carbonic gas ($CO_2$), water ($H_2O$) and heteroatom. The viability and efficiency in the utilization of several materials as covering which have oxidative catalytic activity has been studied, tested and established in this second path of studies.

In some situations it is necessary the application of covering films using both properties, as much the hydrophilic as the catalytic. So, for a surface where exists an intention in eliminate simultaneously the dust and the organic material, firstly a layer of hydrophilic material is placed directly on the substrate, followed by the deposit of oxidative catalytic material layers on the first hydrophilic layer, in order to form a pile of layers.

The inferior hydrophilic film absorbs the ambient humidity in the empty spaces present between the superior layer of nanocrystals, that is, the oxidative film. The oxidative film has a higher porosity, facilitating the absorption process of the film and eliminating the dust and organic material.

The oxidative films are formed by metallic oxides. The metallic oxides are materials broadly studied due to its performance in a great series of technological applications, among them; the oxidative photo catalysis of organic compounds is pointed out. The oxidative photo catalysis is a technical application of metallic oxides, discovered during the searching for application of said oxides in photo electric production.

The materials synthesis to be used as nanostructured films requires the controlled production of nanocrystals of metallic oxide. Said control should be performed in relation to the mean value and the dispersion on the size of obtained particles, which are related to the superficial area of the material, its density and its reactivity. The synthesis methods of most employed materials are chemical processes in humid way, which can be divided as hydrolytic chemical synthesis methods and non-hydrolytic chemical synthesis methods.

The hydrolytic chemical synthesis methods are based on hydrolysis reactions and can be divided in two groups: metallic alkoxide hydrolysis and metallic halogenate hydrolysis or of others inorganic salts.

The metallic alkoxide are compounds formed by bindings among metal atoms, oxygen atom and carbon atom (metal-oxygen-carbon) and are higher reactive compounds in a aqueous medium, where the ion hydroxile ($OH^-$) binds to the metal atom, which is a organic precursor, originating a hydrolysis reaction. The metal can be selected among titan, zircon, aluminum, silicon and others. This reaction (1) is showed as follows:

$$M\text{-}(OR)_n + nH_2O \rightarrow M\text{-}(OH)_n \downarrow + nROH, \quad (1)$$

where: M is a metal and R is a binding atom.

Due to the higher metallic alkoxide reactivity with water, the reactions should be unbending controlled. The used reagents and atmosphere humidity of ambient where the hydrolysis reactions take place also should be controlled, since the water amount should be practically stoichiometric.

After the partial hydrolysis of the metallic alkoxide, occurs a polycondensation, as the reactions (2) and (3) showed as follows:

$$M\text{-}OH + M\text{-}OR \rightarrow M\text{-}O\text{-}M + ROH, \quad (2)$$

$$M\text{-}OH + M\text{-}OH \rightarrow M\text{-}O\text{-}M + H_2O. \quad (3)$$

where: M is a metal and R is a binding atom.

The polycondensation reaction promotes the formation of a three-dimensional net of metal oxianions, structured at molecular level, been denominated of sol-gel process. However, the obtained products by means of sol-gel process are amorphous metallic oxides and for this reason, have the necessity of thermical treatment or hydrothermal for crystallize the formed particles.

In relation to chemical synthesis methods non-hydrolytic, the Polymeric Precursor Method (PPM) is the most important of said methods. The PPM consists in the cations quelation of a metal by determinate carboxylic acids, aiming to avoid the hydrolysis and precipitation of hydrated metallic oxide.

Since the metallic cations are protected by quelant action, the method continues, adding a polyalcohol, which leads the reaction to the formation of a polymeric precursor. In the polymeric precursor, the cations are distributed randomly in solution and after polymerization there is the formation of a three-dimensional solid net, in order to avoid the precipitation or segregation of the ions in the formation of new phases during the metallic oxide synthesis.

The three-dimensional solid net formed by metallic oxide is an essential characteristic to the multicomponent oxide synthesis, and with complicated stoichiometric compositions. The chemical homogeneity in respect to the cations distribution in the gel system, several times determine the compositional homogeneity of the final oxide.

The PPM method is usually used to process titanates, niobates, zircon and others metallic oxide types. The single metallic oxides as $TiO_2$, ZnO e SnO are most studied because present electric, catalytic and optical interesting properties.

In the specialized literature there are described extensive methods in order to obtain covering and self-cleaning thin films, where some proposals presented become submitted to the patent application.

However, covering applications and thin films obtained by the methods as described in said literature for optical elements not are immediate, since the used materials in optics are reasonably more sensitive to the employed conditions during the realization of the obtaining methods of said coverings and thin films, as for example, the higher temperature values.

The deposition method which involves thermical treatment under higher temperatures affects the optical grade of the elements used in optics. Besides, some lenses are manufactured with polymeric substrates, which simply do not support high temperature values.

So, it was necessary to develop methodologies, in which temperature values between 25 - 100°C, in order that the obtained products may be used directly on the sensible substrates. In order to the method do not compromise the structural and dimensional stability of the substract, avoiding deformations and stress on the materials.

Specific glasses for optical applications are generally manufactured with tempered materials and obtained by so refined procedure, which is capable in relief glasses internal stresses, and its optical effects as the polarization and bi-refrigency.

Other necessary characteristic for covering materials for optical application, especially in glasses, refers to the formed thin film quality, in which specific properties, such as, transparency and the light scattering should be considered, and this requires that said formed thin film has a nanostructure and morphology well defined, which are controlled by the obtained method. Other properties related to the functions of thin films which serve as glass covering, are anti-reflex and radiation filters.

So, the self-cleaning thin film application method must be designed in order that all characterizing properties of said film be integrated and enhanced aiming the efficiency.

When a film of self-cleaning thin film is applied on a surface, successive covering layers will be formed, said layers will comprise a unique film formed by a multifunctional thin film.

The literature discloses that the titan dioxide is the material mostly used as self-cleaning cover for optical elements surfaces, due the fact that such material presents in crystalline form anatese, an excellent oxidative photo catalytic activity when submitted to ultra-violet radiation. The absence of toxicity and the chemical stability in a wide pH range also contributes to this material be preferred.

The titan dioxide has a little hydrophilic characteristic, which is substantially high when this material is submitted to electromagnetic radiation over a long period of time. Such fact becomes the use of titan dioxide more advantageously, because as fat and its agglomerates, as well dust, are eliminated simultaneously. The agglomerates elimination is the main self-cleaning requisite to cover application in optical components, especially in glasses.

Another particular titan dioxide characteristic is its bactericide activity, which is a barrier against live organisms, such as bacteria, fungus and others microorganisms.

Due to its bactericide activity, the titan dioxide is used as surfaces disinfectant, which is a desirable property for optical components, especially in glasses. Such components are used under ambient conditions, in which the fungus attack is favorable, facilitating the growth of microorganism's cultures.

The titan dioxide is a semiconductor material having three allotropic forms: anatese, rutile and brookite. However, only in the crystallographic phase, anatese, the titan dioxide has a photo catalytic activity for the organic substances degradation.

Under illumination by natural source or by artificial source, for instance, the ultra-violet illumination (UV), several organic substances are decomposed in aqueous solution in titan dioxide presence. The solution of titan dioxide can be as a fine powder or deposited (coating) on a surface.

When the titan dioxide crystals are irradiated with ultra-violet light the generation of electron-lacuna pairs, take place, so the electrons are moved from valence band to the conduction band, producing lacunas in the valence band.

The lacunas in the valence band react with water molecules or with hydroxile ions to produce hydroxile radicals, which are powerful oxidants of organic molecules.

The electrons of conduction band also produce other radicals derived from oxygen atoms. These radicals are formed capturing the electrons photo generated in the conduction band, which are good oxidant agents.

However, generated in a secondary manner, the photo generated electrons of conduction band cooperate for organic molecules degradation. This photo generation mechanism, followed by oxidation, is called Advanced Oxidative Process (AOP) heterogeneous.

All activities comprising the state of art in this area are performed aiming to develop new materials, single or compounded, which have the requisites of: photo-activity, photostability, atoxic, chemical stability; or for obtaining better process among the methods which are good knew; or still, to do small modifications in the methods, to produce self-cleaning coatings more efficient and stable.

## SUMARY OF INVENTION

The present invention refers to a nanostructured thin film obtaining method having a self-cleaning function, which serves as a covering layer to be applied on transparent optical substrates surfaces in optical applications. The application of thin film on the substrate, or on an additional covering layer with anti-reflex function, anti-scratch or anti-radiation, previously deposited on these substrates, without loss of function in each of these films. The coating layer formed by a thin film film is provided with a self-cleaning property against organic substances which can be adhered to said surface. The self-cleaning property in the thin film obtained by the method of present invention is based on the photo catalytic oxidation, intrinsic and spontaneous, promoted in the presence of titan dioxide nanoparticles ($TiO_2$), which are submitted to electromagnetic radiation, degrading entirely the organic compounds adhered to a surface.

## DETAILED DESCRIPTION OF INVENTION.

The method developed in the present invention produces a nanostructured thin film as product. Said thin film is applied on optical elements surfaces, such as glasses, lens in general, prisms, filters and mirrors of optical systems in general, on windows and viewfinders of instruments, more specifically, said thin film is applied on transparent materials having optical application, such as mineral lens and vitreous: as optical glass, crystals, quartz, melted silica; or organic materials, as polymeric lens: polycarbonates, in order to form a coating film, which has self-cleaning intrinsic properties.

Due to the intrinsic properties of the thin film obtained, such film is able to adjust to the substrate, in order to control the structure, the morphology and the homogeneity of the film, in a nanometric scale. Further, the obtained film cannot damage the substrate and must be photolytic stable, mechanically durable and has active bactericide activity.

The method described in the present invention consists in two different paths, which comprises firstly a hydrolytic step, followed by a non-hydrolytic step. Originating a combination of methods, this produces a specific methodology, comprising a method of modified polymeric precursor.

In said method, the hydrolytic step comprises a metallic alkoxide precursor hydrolysis reaction, such as the titan tetra isopropoxide ($Ti[OCH(CH_3)_2]_4$). So, the titan cations ($Ti^{4+}$) are produced in aqueous solution.

Following, a reaction developed by a non-hydrolytic medium is used, which was modified a little to be applied in the present embodiment.

So, a complexant agent is added to reactional medium in order to protect the titan cations ready obtained by means of hydrolysis reaction. The complexant agent used in the present embodiment was the citric acid ($C_6H_8O_7$). The citric acid promotes the quelation of titan cations ($Ti^{4+}$), in order to protect said cation and to form a solution of titan citrate, avoiding the hydrolysis and the precipitation of hydrated metallic oxide.

Later, a polyalcohol is added to the titan citrate solution to promote a polyesterification reaction between the citric acid and the polyalcohol, forming an ester polymer and water. In the present embodiment the used polyalcohol was an ethylene glycol solution ($HOCH_2CH_2OH$).

The esteric polymer obtained by the combination of hydrolytic step with the non-hydrolytic step is calcined under controlled conditions, in order to form pulverized particles in a nanometric scale and with the whole nanocrystals in the anatese crystalline form. The control should occur under a mean value and standard deviation in the nanometric particles size distribution, which are anatese crystallite particles.

The application method of nanostructured thin film so obtained by the method developed in the present invention, comprises the deposition of nanoparticles directly on the optical substrate by means of optical substrate immersion in a colloidal suspension previously prepared with alcohols, varnishes with titan dioxide nanoparticles, followed by a slow removal at a controlled velocity of said substrate from the suspension, or still on additional layers of others coating films having anti-reflex, anti-scratch or anti-radiation functions without loss of the functions in each of said films.

The optical substrate removal velocity from the colloidal medium determines the thickness and the rugosity of the coating layer formed by the produced thin film, so as the concentration and the homogeneity in the titan dioxide nanoparticles distribution on the optical substrate surface.

In order to facilitate the comprehension and purpose of the present invention, from now on, the process and the developed method of present invention will be better detailed. The nanostructured thin film obtaining method comprises:

Firstly, the citric acid is dissolved in water under a suitable temperature value, which can be between 50°C and 100°C. Following, the titan precursor, titan tetra isopropoxide, is added slowly and under agitation.

As addition product of titan precursor to citric acid, isopropanol and titan hydroxide is obtained, which are products resulting from the alkoxide hydrolysis. The formation of these products is easily observed due to the appearing of a white precipitate which dissolves itself during the reaction time.

The proportion adjust between the citric acid solution and titan cations, allows the size control of nanoparticles formed. In the present embodiment the used proportion of citric acid solution and titan cations is about 4:1.

Next step of synthesis method is the polyesterification reaction, which occurs by means of etilene glycol addition to the solution with titan citrate in suitable proportions. In the present embodiment, the used proportion is 60:40 respectively. As a product of polyesterification reaction an ester in form of a polymeric substract and water are obtained.

Further, all the product obtained by the polyesterification reaction, is submitted to a pirolisys reaction, in which the polymeric precursor calcination occurs under a temperature value about 300 - 500 °C preferably by a period of time of two hours, in a static atmosphere. The polymeric precursor calcination occurs to promote the elimination of all water from the reaction and an organic matter portion.

Although a portion of organic matter has been eliminated previously during the calcination reaction, the product of said reaction is an expanded resin still rich in this kind of material

Following, the formed resin is divided and the obtained powder is triturated preferably in a ball mill during a period of time around two hours under about 500 rpm.

The obtained material after trituration is characterized by means of specialized techniques, such as X-ray diffraction. The diffractogram so obtained presents a single and well defined signal, which indicates that, the obtained final material is crystalline, with anatese crystallographic phase and not having phases mixture. So, the obtained nanoparticles are totally, that is 100%, compounded of anatese crystals.

The information presented in the diffractogram become possible the compute of the mean size of the crystallite by Scherrer's equation (4):

$$D = \kappa\, \lambda\, /\, \beta \cdot cos\, (\theta), \qquad (4)$$

where: D is the mean diameter of the crystallite
$\theta$ is the diffraction angle in which the diffraction
$\beta$ is the width at mean height of interest
$\lambda$ is the wavelength of the incident radiation; and
$\kappa$ is a proportionality constant.

Scherrer's equation result shows that the typical diameter of the anatese nanoparticles samples varies about 50 to 100 nm.

The value of superficial area of anatese nanoparticles samples is determined by means of isothermal nitrogen adsorption-desorption curves observation and the typical values obtained of superficial area varies around 20 a 50 m$^2$/g.

The anatese particles morphology was verified by means of high resolution scanning electronic microscopy. The obtained results of measures confirm that the formation of spherical particles agglomerates resulting of nucleation process and nanocrystals growth.

The titan dioxide nanoparticles production can be performed in large scale, in a different place where the optical substrate was produced and so, a different place where the substract will receive the coating layer.

The nanostructured thin film application method on an optical substrate surface comprises the layers deposition of said thin film directly on the optical substrates or on other thin film layers with anti-reflex, anti-scratch or anti-radiation action, previously already deposited on the substrates. However, it is necessary the previous preparation of colloidal suspensions by means of nanoparticles dispersion in suitable solvents.

Several assays related to the preparation of colloidal suspensions were performed, in order to find a more suitable dispersant. The performed assays approved the use of solvents with different polarities, such as: methanol, ethanol, etilene glycol and a varnish compounded by methanol and acetyl ketone. The varnish compounded by methanol and acetyl ketone is used to coating application anti-scratch.

The colloidal suspension were prepared with different meaning of solids, and concentration varying from 0,1 to 2,0% of anatese nanoparticles, and showing stability, independent of solids concentration.

Due to colloidal suspension stability, said suspensions can be stored and used during long time without require particles redispertion.

The storage of different formulations of colloidal suspensions prepared with the anatese titan dioxide nanoparticles allows the thin film application bath reconfiguration at high velocity, considering that the step of thin film application on the substrate is more single in operational terms than the nanoparticles production.

To evaluate the suspension stability, were performed measures from the nanoparticles zeta potential, as a pH function of suspension in an alcoholic medium. The obtained results from the performed measurements, it was verified that the titan dioxide nanoparticles, anatese crystallization, are stable in suspension when its pH is around 6,0. The isoeletric point of nanoparticles occurs in a pH value around pH = 1,5.

The substrate in which the titan dioxide nanostructured of thin film will be applied must be cleaned previously.

The optical substract, such as glasses, is immersed in the colloidal suspensions and so being removed slowly from the medium in a controlled manner.

After the optical substract immersion in the colloidal suspension, said substracts are submitted to additional processes to pre-cure in a temperature value around 25 °C. After that, the optical substract in submitted to thermal treatment under a temperature value around 100 °C.

Tests performed in said substracts after thermal procedures, showed that the adherence in both cases was satisfactory and the mechanical stability of titan dioxide nanoparticles was guaranteed. The results for the deposition on the thin film anti-reflex produce similar results.

Transmittance assays were performed in electromagnetic spectrum of visible ultra-violet range to evaluate the thin film transparency. The obtained results for optical substracts showed a transmittance value around 85% e 100%, depending on the substract and application conditions of thin film.

The variants of the titan dioxide nanostructured thin film application method are: the number of applied layers, the concentration in a alcoholic medium of colloidal suspension, the difference between the removal velocity of substract from the colloidal medium and thermal treatment, in which said substracts were submitted after application.

To evaluate the self-cleaning efficiency of the titan dioxide nanostructured thin film obtained from the method as described in the present invention and applied to an optical substract by the method as described, degradation measures of an organic chromophore were performed. In the present invention the used chromophore was the rhodamine 6G, which is susceptible to photo catalytic oxidation.

The degradation monitoring of said chromophore was performed by means of spectroscopic techniques, as a time function, allowing the photo catalysis efficiency evaluation. The results obtained by spectroscopic techniques shows clear dye decomposition in a suitable time, in order to guarantee the photo catalytic efficiency of the produced thin film.

So, the obtained thin film by means of the method described in the present invention provides means for efficient removal of organic compounds which are adhered in a strong manner on the optical components surfaces, mainly glasses.

The self-cleaning thin film avoids the formation of determined stains which become definitive due to the severity of impregnation.

The optical elements coated with these materials do not need periodic cleanness, due the self-cleaning property of the coating layer, this fact saves time and work in cleanness procedures, as well, avoid accidents which can cause irreparable damage, such as scratches on surfaces, generally occurring during cleanness operation.

The optical elements coated with self-cleaning films shows a high transparency during most time of its utilization, because the nanostructured film has high reactivity, and so, the surface is continuously degrading the organic material and eliminating mineralized materials after the occurrence of oxidation reaction.

## Claims

1. Method for obtaining a nanostructured thin film, **characterized by** comprises a specific methodology based on the combination of a hydrolytic path and a modified non-hydrolytic path according to the following steps:

   - hydrolysis reaction of a metallic alkoxide precursor, the titan tetraisopropoxide (Ti[OCH(CH3)2]4) to produce titan cations (Ti4+) in aqueous solution;
   - complexant agent addition, preferably citric acid ($C_6H_8O_7$) to the reactional medium, previously dissolved in water under a temperature range value between 50°C and 100°C in order to promote the quelation of titan cations (Ti4+), in order to protect said cation, avoiding the precipitation, form of titan citrate solution and avoiding the hydrolysis and the precipitation of the metallic oxide hydrated;
   - polyalcohol addition, preferably ethylene glycol ($HOCH_2CH_2OH$), a titan citrate solution to promote a poly esterification reaction between citric acid and the polyalcohol, producing a ester polymer and water.
   - pirolisys reaction with the polymer calcination under controlled conditions, in order to form pulverized particles of titan dioxide in a nanometric scale and with whole nanocrystals in the anatese crystalline form;
   - titan dioxide trituration to achieve the pulverized form; and
   - characterization of the obtained product by following techniques: X-ray, isothermal nitrogen adsorption-desorption curves, high resolution scanning electronic microscopy.

2. Method, according to claim 1, **characterized in that** said method is controlled by the following parameters: mean value and standard deviation in the nanometric particles distribution size.

3. Method, according to claim 1, **characterized in that** the proportion between the citric acid solution and the titan cations be preferably about 4:1.

**4.** Method, according to claim 1, **characterized by** a poly esterification reaction preferably be done by ethylene glycol addition to the solution containing titan citrate in the preferably proportion of 60:40.

**5.** Method, according to claim 1, **characterized by** polymeric precursor calcinification take place during the pirolisys under a temperature value range about 300 - 500 °C, preferably by a period of two hours, in a static atmosphere.

**6.** Method, according to claim 1 and 4, **characterized by** the resin formed during the calcinification be non-agglomerated and the achieved powder be triturated by a approximated period of two hours under a approximated rotation of 500 rpm.

**7.** Method, according to claim 1, **characterized by** the obtained titan dioxide be **characterized by** X-ray diffraction and the obtained diffractogram shows a well defined unique signal, denoting that the obtained final material is crystalline, with crystallographic phase anatese, not indicating phases mixture and allowing the compute of the crystallite mean size using Scherrer's equation.

**8.** Method, according to claim 1 and 7, **characterized in that** Scherrer's equation result shows that the typical diameter of the anatese nanoparticles are about 50 to 100 nm.

**9.** Method, according to claim 1, **characterized in that** the obtained titan dioxide be **characterized by** isothermal nitrogen adsorption-desorption curves, showing that the value of the nanoparticles superficial area of anatese is around 20 a 50m2/g.

**10.** Method, according to claim 1, **characterized by** the nanoparticles morphology of anatese be defined by means of electronic microscopy and presents spherical particles agglomerates obtained from nanocrystals growth and nucleation methods.

**11.** Thin film **characterized in that** said film is formed by nanostructered titan dioxide, self-cleaning, self-adjusted to the substrate, in order to control the structure, morphology and homogeneity of the film, in a nanometric scale, not damaging the substrate, having a bactericide property, with photolytic stability, durable mechanically and when subjected to electromagnetic radiation to degrade the organic substances imbued onto optical elements surfaces.

**12.** Thin film, according to claim 1 and 11, **characterized in that** said film is manufactured in large scale, in a different place where the substrate is produced and where the covering layer will be applied.

**13.** Thin film, according to claim 11, **characterized in that** the optical elements covered with said film not require periodical cleaning, due the self-cleaning properties of the covering layer and having high transparency almost whole lifetime of its utilization.

**14.** Thin film, according to claim 11, **characterized in that** the substrates of application of said film are preferably glasses, lens in general, prisms, filters and mirrors of optical systems in general, over windows and instruments viewfinders, more specifically, transparent materials in optical applications, such as mineral and vitreous lenses: as optical glass, crystals, quartz, melted silica; or organic materials, as polymeric lenses: polycarbonates.

**15.** Method of application of nanostructered thin film, **characterized in** comprise the deposition of said thin film directly over the optical substrate by means of immersion of the optical substrate in an colloidal suspension previously prepared, followed by a slowly removing at a controlled velocity of said substrate from the suspension.

**16.** Method of application of thin film, according to claim 15, **characterized in** comprise the deposition of said thin film over additional layers of others covering pellicles with anti-reflex functions, anti-scratch or anti-radiation, previously placed over the substracts without damaging such films by means of immersion of the optical substrate in an colloidal suspension previously prepared, followed by a slowly removing at a controlled velocity of said substrate from the suspension.

**17.** Method of application of thin film, according to claim 15 and 16, **characterized in that** the removing velocity of the optical substrate from the colloidal suspension determine the thickness and rugosity of the thin film produced, as well as the concentration and homogeneity of the titan dioxide nanoparticles distribution over the optical substrate surface.

**18.** Method of application, according to claim 15 and 16, **characterized in that** the colloidal suspensions are prepared by means of nanoparticles dispersion in suitable solvents, having stability and allowing its storage and use during long time without require particles redispertion.

**19.** Method of application, according to claim 18, **characterized in that** the used solvents as dispersants are selected from methanol, ethanol, ethylene glycol and a varnish composed of methanol and acetyl ketone.

**20.** Method of application, according to claim 18, **characterized in that** the colloidal suspensions are prepared with different solid concentrations, the concentration varying from 0,1 % to 2,0% anatese nanoparticles.

**21.** Method of application, according to claim 18, **characterized in that** the colloidal suspensions be stable not depending from solid concentration allowing its storage and use during long time without require particles redispertion.

**22.** Method of application, according to claim 18, **characterized in that** the suspensions stability could be evaluated measuring the zeta potential of nanoparticles as a pH function of suspension in a alcoholic medium.

**23.** Method of application, according to claim 15 and 18, **characterized in that** the titan dioxide nanoparticles and anatese crystallization are stables in suspension when its pH is around 6,0, the nanoparticles isoeletric point occurs in a pH value is around 1,5.

**24.** Method of application, according to claim 15, **characterized in that** after immersion of the optical substract in the colloidal suspension, said substracts are subjected to additional pre-cure methods in a temperature around 25°C and thermical treatment in a temperature around 100 °C.

**25.** Method of application, according to claim 15, **characterized in that** optical substracts has a transmittance around 85 % and 100%, depending on the substract and the application conditions of the thin film, by means the transmittance assay in visible ultraviolet range of electromagnetic spectrum.

**26.** Method of application, according to claim 15, **characterized in that** the titan dioxide nanostructered thin film self cleaning efficiency evaluation is obtained by means of degradation in a organic chromophore, rhodamine 6G susceptible to photo catalytic oxidation.

**27.** Method of application, according to claim 15 and 26, **characterized by** the degradation monitoring of said chromophore is produced by means of spectroscopic techniques, as a time function, allowing the photo catalysis efficiency evaluation.

**28.** Method of application, according to claim 15 and 26, **characterized by** the obtained results by spectroscopic techniques presents obviousness dye decomposition in a due time to assure a photo catalysis efficiency of the produced thin film.